# DEMANDE DE BREVET EUROPEEN

(11) **EP 1 087 601 A2**
(43) Date de publication de la demande: **28.03.2001**
(21) Numéro de dépôt: 00402576.3
(22) Date de dépôt: 18.09.2000
(51) Int. Cl.: H04M 7/00, H04M 11/06, H04L 12/28, H04L 29/06

(54) **Installations et procédé pour transmettre des communication téléphoniques**

(30) Priorité: 23.09.1999 FR 9911874
(71) Demandeur: ALCATEL, 75008 Paris (FR)
(72) Inventeur: de Loye, Martin, 92310 Sevres (FR)
(74) Mandataire: Sciaux, Edmond

(57) **Abrégé**

Cette installation téléphonique comporte : un combiné téléphonique analogique, un terminal de connexion à Internet, destiné à être relié au réseau Internet par un réseau téléphonique, et des circuits de commutation permettant de connecter le combiné au terminal de connexion à Internet, de façon à permettre à ce combiné d'envoyer et recevoir des signaux de parole, ayant un format analogique, respectivement à destination et en provenance du réseau téléphonique.

L'installation comporte en outre des moyens pour recevoir des ordre via le réseau téléphonique. Les circuits de commutation sont commandables par des ordre émis par un serveur, ces ordres commandant lesdits circuits de commutation pour connecter le combiné au terminal.

Application à la téléphonie sur Internet

## Description

La présente invention a pour objet une installation téléphonique, une installation de fourniture d'accès à Internet ainsi qu'un procédé d'utilisation de ces installations pour transmettre des communications téléphoniques. Elle a pour but d'augmenter la palette des services offerts par Internet, et d'une manière générale d'augmenter les possibilités de transmission.

Dans le domaine de la téléphonie on connaît la téléphonie classique dans laquelle des signaux de parole échangés entre des interlocuteurs modulent, en bande de base, un signal électrique transmis par des lignes bifilaires, souvent torsadées. Avec des procédés de codage et de modulation, ces principes de transmission ont même été utilisés pour transmettre des données numériques. Dans ce cas, les données numériques à transmettre sont modulées à l'émission, et démodulées en réception, par des modems pour être transmises par des mêmes voies que les voies de transmission des signaux de parole. Par la suite, on dira de ces signaux ainsi modulés qu'ils sont des signaux modulés de manière analogique naturelle. Ces signaux analogiques naturels s'opposent à des signaux numériques. Les signaux numériques, typiquement des signaux binaires pour une modulation en bande de base, nécessitent un codage préalable.

Par ailleurs, lorsqu'il s'agit d'envoyer des signaux de parole par une voie numérique, des vocodeurs sont chargés de convertir des signaux analogiques naturels en des suites de bits cadencés avec un rythme normalisé. On trouve notamment de telles conversions dans le domaine de la téléphonie mobile où tous les traitements, y compris les traitements de modulation et d'émission radioélectrique, sont effectués en numérique.

Dans le cadre du réseau Internet, les signaux échangés entre des terminaux et des sites Internet visités par les utilisateurs de ces terminaux sont des signaux numériques formatés selon un protocole particulier dit IP (Internet Protocol) spécifique à Internet. Dans un terminal de connexion à Internet, il existe donc des circuits de conversion adaptés.

Initialement, les connexions à Internet ne comportaient que la visite de sites. Le principe d'une telle visite est le suivant. A partir de son terminal Internet, un utilisateur compose une adresse d'un site. Souvent cette composition est grandement simplifiée et réduite à l'action d'un double clic de souris sur une icône présentée sur l'écran du terminal. Le microprocesseur du terminal se charge alors de trouver dans une mémoire du terminal l'adresse du site correspondant à cette icône, de constituer avec cette adresse un message conforme au protocole IP, et de faire transmettre par un modem le message à des circuits d'un fournisseur d'accès.

Le fournisseur d'accès transmet, par ses circuits, une requête élémentaire au site désigné par ce message d'adresse. Le site désigné recevant cette requête élémentaire envoie alors au terminal un fichier représentant une page. L'envoi au terminal est relativement aisé puisque, dans le format de type IP, l'adresse du terminal utilisateur, est transmise en même temps que l'adresse désignant le site visé.

A cette utilisation, élémentaire mais déjà particulièrement intéressante, ont été ajoutées des services de communication téléphonique. Le document **WO 97/47118** décrit un système permettant une communication téléphonique pendant une session Internet : Les terminaux d'utilisateur sont des ordinateurs personnels munis chacun d'un haut-parleur et d'un micro reliés à une carte son. Cette carte son comporte :
- un dispositif de numérisation et de compression pour convertir les signaux de parole fournis par le micro en signaux numériques,
- et un dispositif de conversion numérique-analogique, et de décompression, pour convertir des signaux numériques de parole en signaux analogiques applicables au haut-parleur.

Le processeur réalise un formatage pour constituer des paquets de type IP avec les signaux numériques issus de la carte son. Un modem assure la transmission sur une ligne téléphonique analogique classique, de ces signaux de parole numérisés et formatés au format IP. En dehors des cessions Internet, la ligne téléphonique est utilisable par un combiné téléphonique classique. Mais pendant chaque cession Internet, ce combiné est inutilisable car la ligne est occupée par le modem.

Pour commencer une session Internet, le terminal établit une communication avec les circuits d'un fournisseur d'accès à Internet. Ces circuits attribuent une adresse Internet au terminal.

Lors d'un appel téléphonique au départ de ce terminal Internet, une application de téléphonie est exécutée dans le terminal. L'utilisateur saisit le numéro de l'abonné qu'il veut appeler. Les paquets IP sont reçus par les circuits du fournisseur d'accès à Internet puis sont retransmis à destination d'un serveur de téléphonie. Ce serveur établit une communication téléphonique avec la ligne de l'abonné appelé :
- Si l'abonné appelé a un combiné classique, la communication établie entre lui et le serveur est une communication téléphonique classique. Le serveur envoie des signaux de parole analogiques et décomprimés.
- Si l'abonné appelé a un ordinateur personnel muni d'une carte son, d'un micro, d'un haut-parleur, et qu'il est en train d'exécuter une application de téléphonie utilisant le même serveur, ce dernier alerte l'abonné au moyen d'un paquet IP. Si l'abonné prend l'appel, le serveur lui envoie les signaux de parole sous la forme numérique comprimée, dans des paquets IP.

Lors d'un appel téléphonique partant d'un poste téléphonique classique à destination de l'abonné utilisant un terminal Internet, considérons le cas où ce terminal Internet est en fonctionnement, une application de téléphonie étant en cours d'exécution dans le terminal. L'abonné appelant saisit le numéro correspondant à la ligne à laquelle le terminal Internet est raccordé. Mais le réseau téléphonique renvoie cet appel sur le serveur de téléphonie. Le serveur sait que le numéro téléphonique appelé correspond à une adresse IP qui permet d'établir une liaison téléphonique au moyen du protocole Internet. Il envoie un message d'alerte à l'abonné appelé, sous la forme d'un paquet IP. Si l'abonné appelé prend l'appel, le serveur numérise, comprime, et met en paquet IP les signaux de paroles de l'abonné appelant. Les paquets IP sont envoyés aux circuits du fournisseur d'accès à Internet puis sont retransmis au terminal Internet de l'abonné appelé.

Un tel procédé d'acheminement de communications téléphoniques présente l'avantage, par rapport aux procédés classiques, de pouvoir utiliser une infrastructure unique, celle du réseau Internet, pour transmettre à la fois des données et des paroles.

Ce procédé présente cependant l'inconvénient que le terminal Internet doit être équipé d'une carte supplémentaire pour effectuer la numérisation et la compression des signaux de parole, et les opérations inverses, et pour pouvoir brancher un haut-parleur et un micro, ou un combiné téléphonique. Dans le cadre de l'utilisation des micro-ordinateurs personnels du type dit compatible IBM, comme terminaux de connexion à Internet, il est possible de mettre en place dans le micro-ordinateur une carte son qui le rend capable d'effectuer la numérisation et la compression, et d'accepter la connexion d'un combiné téléphonique ou d'un haut-parleur et d'un microphone. Cette installation entraîne un coût supplémentaire. D'autre part, l'installation de cette carte son n'est pas possible dans certains terminaux Internet. Un des objectifs de la présente invention est donc de s'affranchir du surcoût et de la complication présentés par l'installation de cette carte.

L'invention a pour objet une installation téléphonique comportant : un combiné téléphonique analogique, un terminal de connexion à Internet, destiné à être relié au réseau Internet par un réseau téléphonique, et des moyens pour coupler ce combiné téléphonique à ce terminal de connexion à Internet; et qui est caractérisée en ce que les moyens pour coupler comportent des circuits de commutation permettant de connecter le combiné au terminal de connexion à Internet, de façon à permettre à ce combiné d'envoyer et recevoir des signaux de parole, ayant un format analogique, respectivement à destination et en provenance du réseau téléphonique.

Selon un premier mode de réalisation, les circuits de commutation sont commandables manuellement. Pour téléphoner, un utilisateur connecte son terminal Internet au réseau Internet. Il désigne un site spécifique. Ce site est un serveur qui envoie une page au terminal pour inviter l'utilisateur à commander manuellement les circuits de commutation du terminal Internet pour connecter le combiné analogique au terminal Internet de façon à permettre à ce combiné d'accéder à la ligne analogique, c'est à dire d'envoyer et recevoir des signaux analogiques de parole, respectivement à destination et en provenance du réseau téléphonique. Ainsi le combiné est mis en relation avec les circuits du fournisseur d'accès, par la liaison analogique, malgré qu'une cession Internet ait commencé. Le serveur envoie en outre un ordre aux circuits du fournisseur d'accès pour que ces circuits effectuent les traitements de conversion analogique-numérique, de compression, et de mise en paquets au format IP. Les signaux de parole sont ensuite acheminés via Internet, comme cela est connu dans l'état de la technique.

Selon un second mode de réalisation, l'installation comporte en outre des moyens pour recevoir des ordre via le réseau téléphonique ; et les circuits de commutation sont commandables par des moyens pour recevoir des ordre émis par ce serveur, ces ordres commandant lesdits circuits de commutation pour connecter le combiné au terminal.

Pour téléphoner, un utilisateur connecte son terminal Internet au réseau Internet. Il désigne un site spécifique. Ce site est un serveur qui donne alors un ordre aux circuits de commutation du terminal Internet pour connecter le combiné analogique au terminal Internet de façon à permettre à ce combiné d'accéder à la ligne analogique, c'est à dire d'envoyer et recevoir des signaux analogiques de parole, respectivement à destination et en provenance du réseau téléphonique. Ainsi le combiné est mis en relation avec les circuits du fournisseur d'accès, par la liaison analogique, malgré qu'une cession Internet ait commencé. Le serveur envoie en outre un ordre aux circuits du fournisseur d'accès pour que ces circuits effectuent les traitements de conversion analogique-numérique, de compression, et de mise en paquets au format IP. Les signaux de parole sont ensuite acheminés via Internet, comme cela est connu dans l'état de la technique.

L'invention a également pour objet une installation de fourniture d'accès à Internet, comportant :
- des circuits de connexion pour la relier d'une part à un réseau téléphonique et d'autre part au réseau Internet,
- et des circuits de conversion de signaux de parole ayant un format analogique en des signaux ayant un format numérique acceptable par le réseau Internet ;
et qui est caractérisée en ce qu'elle comporte des moyens pour envoyer des ordres de commutation à une installation téléphonique comportant un combiné téléphonique analogique, un terminal de connexion à Internet, couplé à ce réseau téléphonique, et des circuits de commutation pour connecter le combiné au terminal ; ces ordres commandant lesdits circuits de commutation pour connecter le combiné au terminal de connexion à Internet, de façon à permettre à ce combiné d'envoyer et recevoir des signaux de parole, ayant un format analogique, respectivement à destination et en provenance du réseau téléphonique.

Elle a enfin pour objet également un procédé d'acheminement de communications téléphoniques à partir ou à destination d'une installation téléphonique comportant un combiné téléphonique analogique, un terminal de connexion au réseau Internet, couplé à un réseau téléphonique, et des circuits de commutation pour connecter le combiné au terminal ; dans lequel on établie d'abord une connexion entre le terminal et le réseau Internet par l'intermédiaire des circuits d'un fournisseur d'accès ;
et qui est caractérisé en ce que, pour mettre en relation ce combiné téléphonique avec les circuits du fournisseur d'accès, on envoie des ordres de commutation depuis un serveur via les circuits d'un fournisseur d'accès au réseau Internet, ces ordres commandant les circuits de commutation pour connecter le combiné au terminal de façon à permettre à ce combiné d'envoyer et recevoir des signaux de parole, ayant un format analogique, respectivement à destination et en provenance du réseau téléphonique.

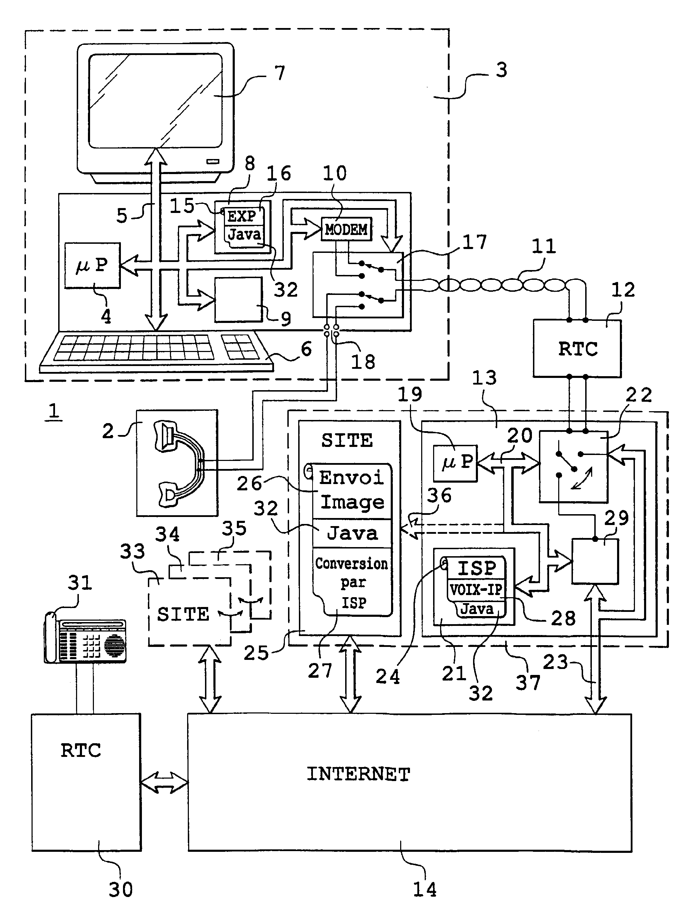

L'invention sera mieux comprise à la lecture de la description qui suit. La figure 1 unique montre une installation téléphonique, une installation de fourniture d'accès à Internet, et les moyens utiles pour mettre en oeuvre le procédé d'acheminement de communications selon l'invention.

L' installation téléphonique 1 comporte un combiné téléphonique 2 et un terminal 3 de connexion à Internet. Dans le but d'une telle connexion, le terminal 3 comporte, dans un exemple représenté ici correspondant à un micro-ordinateur de type personnel, un microprocesseur 4 en relation par un bus 5 de données, d'adresses et de commandes avec un clavier 6 (comportant une boule de manoeuvre, ou une souris, ou autre non représentées), un écran 7, une mémoire programme 8, et une mémoire de données 9. Pour la connexion à Internet, le terminal 3 comporte également un modem 10, en relation avec le bus 5 d'une part et avec une ligne téléphonique 11 pour être relié, la plupart du temps via le réseau téléphonique commuté 12, à des circuits 13 d'un fournisseur d'accès au réseau Internet 14. D'une manière connue la mémoire 8 comporte un programme 15 muni essentiellement d'un système d'exploitation 16. Le système 16 est dédié, ou non, à l'utilisation du terminal 3 pour des communications avec le réseau Internet 14.

L'installation téléphonique 1 est particulièrement caractérisée par la présence de circuits, 17, ici schématiquement représentés, pour envoyer des signaux de parole en un format analogique naturel sur la liaison 11 entre le terminal et le réseau Internet 14. Les circuits 17 se présentent ici sous la forme d'un commutateur permettant de relier à la demande un port de sortie du modem 10, ou le combiné téléphonique 2 (ou les deux en même temps), à la ligne 11. Le circuit 17 est de préférence un circuit automatique, commandé par le microprocesseur 4 duquel il reçoit des ordres de commutation par l'intermédiaire du bus 5. Il serait toutefois envisageable que le commutateur 17 soit un commutateur manuel mécanique, correspondant par exemple à l'enfoncement d'une fiche de type jack du combiné 2 dans un port 18 du terminal 1.

Pour accueillir un fonctionnement selon l'invention, les circuits 13 du fournisseur d'accès comportent d'une manière classique un microprocesseur 19 jouant un rôle d'unité arithmétique et logique et relié par un bus 20 à une mémoire programme 21 et à des circuits de connexion 22. Les circuits de connexion 22 permettent en pratique de relier la ligne 11 au réseau Internet 14. Les circuits de connexion 22 sont représentés ici sous une forme très symbolique d'un commutateur. Dans la pratique les circuits 22 comportent des circuits de réception de paquets au format IP transmis par la ligne 11 et des circuits d'injection de ces paquets, avec les synchronisations et débits adaptés, dans une liaison 23 des circuits 13 au réseau Internet 14. Dans ce but le microprocesseur 19 fait mettre en oeuvre un programme 24 ISP de fourniture d'accès à Internet. Ce fonctionnement est connu.

Dans l'invention, la communication établie par le terminal 3 comportera au début la désignation d'un site spécifique 25, par exemple relié au réseau Internet 14. On verra par la suite que cette désignation peut être modifiée. Normalement un tel site 25 ne sait faire qu'une chose. Il ne sait qu'envoyer par un programme 26 une image correspondant à l'adresse du site 25. Dans l'invention, en plus de l'envoi d'une image (qui n'est même pas nécessaire mais qui peut être préféré), ou au lieu de cet envoi, le site 25 provoquera par un programme 27 la commutation du circuit 17 et la conversion par les circuits 13 du fournisseur d'accès des signaux de parole reçus en des signaux au protocole Internet.

Dans ce dernier but, la mémoire programme 21 comportera dans le programme 24 un sous-programme 28, dit VOIX-IP, permettant le codage de parole et le formatage IP des signaux reçus. Le programme 28 aura aussi pour effet de commuter les circuits 22 pour que les signaux reçus en provenance de la ligne 11 ne soient pas transmis tels quels au réseau 14 mais soient transmis à un circuit 29 de traitement, de codage et de formatage IP. Les circuits 29 peuvent en pratique être des co-processeurs du processeur 19. Dans ce cas, les signaux mis sur la liaison 23 des circuits 13 au réseau Internet 14 sont les signaux issus du co-processeur 29. Dans ces conditions les signaux de parole sont transmis sur le réseau Internet 14 avec le codage convenable. A une autre extrémité, des circuits de type connus permettent, notamment par l'intermédiaire d'un réseau téléphonique commuté 30, de mettre en relation le combiné 2 avec un autre combiné téléphonique 31.

Les circuits 17 de commutation doivent de préférence être enclenchés automatiquement, et doivent être enclenchés à partir d'un ordre de déclenchement provenant du circuit 13 (ou du site 25) et adressé au terminal 3. Eventuellement, cet ordre peut être directement produit par le microprocesseur 4 après réception d'un signal ACK d'accusé de réception provenant du circuit 13 de ce que la requête en désignation du site spécifique 25 a été bien comprise. Dans ce cas, cet accusé de réception est équivalent à l'ordre de déclenchement. Dans la pratique des circuits tels que 17 existent déjà dans tous les micro-ordinateurs de type compatible. De manière à ce que leur commutation résulte de l'ordre de déclenchement, ou de l'accusé de réception, le programme 15 doit comprendre un sous-programme supplémentaire a priori non prévu à l'origine puisqu'il correspond à l'invention. Dans l'invention, on prévoit alors de transmettre au moins une première fois un tel programme 32 depuis le site 26 où il est mémorisé jusqu'au terminal 3 pour que le microprocesseur 4 puisse le mémoriser dans la mémoire 8. Dans ce but ce programme de commutation automatique 32 sera programmé dans un langage JAVA. En effet selon une particularité propre à ce langage, chaque micro-ordinateur comporte maintenant un interpréteur ou un compilateur pour convertir un programme en langage JAVA en un programme exécutable par ce micro-ordinateur. Ce langage JAVA est ainsi un mode de programmation universel compréhensible par tout le monde. On est ainsi sûr que ce programme 32 pourra au moins être interprété par le terminal 3. Le résultat de l'interprétation peut être fugitif, auquel cas le programme 32 devra être envoyé et ou interprété à chaque établissement de communication. De préférence, le programme 32 sera mémorisé puis compilé par le microprocesseur 4 et enregistré dans la mémoire 8 sous une forme exécutable. Toutefois le fait que ce programme 32 soit téléchargé par l'intermédiaire du réseau Internet permet de garantir que le terminal 3 sera tout le temps muni de la dernière version, la plus performante, de ce programme 32. L'envoi du programme 32 est ainsi appelé dans la terminologie classique un applet JAVA puisqu'il est téléchargé.

Le circuit 17 peut déjà être prévu à l'origine dans les circuits du terminal 1, être incorporé dans les circuits du modem 10 ou dans ceux du combiné 2.

Connectés au réseau Internet, de nombreux sites 33 tel, que le site 25 sont accessibles. Certains de ces sites 33 se déclinent en plusieurs pages, attachées les unes aux autres par des liens de type hypertexte transmis avec les fichiers représentant les images à visualiser sur les écrans 7. Il serait par exemple possible que le site 25 soit, comme le site 33, un site relié au réseau Internet. Il est toutefois possible que le programme 28 comporte une aptitude à détecter une requête destiné à un site 25 inexistant et à faire exécuter par des circuits internes au circuit 13, la fonction de ce site 25, sans passer par le réseau Internet 14. En pratique ceci peut être réalisé en munissant les circuits 13 disponibles chez un fournisseur d'accès d'une part une mémoire programme correspondant au site 25, d'autre part d'une connexion complémentaire 36 du bus 20 pour former des circuits généraux 37 et enfin de moyens de détecter la requête spécifique. La solution avec un site 25 réel peut toutefois être préférée pour permettre des accès en de nombreux endroits d'un territoire.

Le fonctionnement du procédé de l'invention est le suivant. Lorsque l'utilisateur de l'installation veut utiliser son terminal 3 pour téléphoner par le biais d'Internet, il enfonce la touche de son combiné 2 dans la prise 18 à moins que le combiné 2 soit en permanence connecté au terminal 1. Il provoque ensuite avec le clavier 6 une requête en connexion (par l'intermédiaire du modem 10) avec un site spécifique 25 connu d'avance. Ceci peut lui être par exemple présenté sur l'écran 7 sous la forme d'une icône éditée par un logiciel de navigation et qui entraîne l'exécution d'un programme d'établissement d'une communication téléphonique sur la ligne 11 et de transmission d'une adresse correspondant au site 25. Les circuits 13 transmettent par le réseau Internet à l'adresse du site 25 une requête au site 25. Le site 25 envoie en réponse par le programme 26 une image (qui peut indiquer en substance un message du type "Vous êtes connecté"), et une instruction adressée, elle, aux circuits 13 d'avoir, premièrement, à envoyer au terminal 3 l'ordre de basculement du circuit 17 pour mettre en relation le combiné téléphonique 2 avec la ligne 11. Deuxièmement, le microprocesseur 19 doit commuter le circuit 22 pour que les signaux transmis par la ligne 11, qui ne sont plus alors des signaux au protocole IP ne soient plus envoyés tels quels sur le bus 23 mais passe par un traitement par le co-processeur 29. Troisièmement, en correspondance le programme 28 fait traiter par le co-processeur 29 les signaux de parole pour les formater au format IP. Dans ces conditions le co-processeur 29 transmet au réseau Internet 14 des signaux de parole formatés au format IP. Le co-processeur 29 est bien entendu capable de travailler en sens inverse, de recevoir des signaux au format IP et de les convertir en des signaux analogiques naturels transmissibles, par l'intermédiaire du réseau RTC 12, sur la ligne 11 jusqu'au combiné 2. Lors de l'établissement de la connexion avec le site 25, le programme 32 vérifie préalablement que le terminal 3 est muni du sous-programme 32 utile pour permettre au microprocesseur 4 de faire basculer le commutateur 17. Si ce n'est pas le cas ce programme 32 est envoyé pour être exécuté préalablement.

## Revendications

1. Installation téléphonique (1) comportant: un combiné téléphonique analogique (2), un terminal (3) de connexion à Internet, destiné à être relié au réseau Internet par un réseau téléphonique (12), et des moyens (17, 4, 32) pour coupler ce combiné téléphonique (2) à ce terminal (3) de connexion à Internet ;
**caractérisée** en ce que les moyens pour coupler comportent des circuits de commutation (17) permettant de connecter le combiné (2) au terminal (3) de connexion à Internet, de façon à permettre à ce combiné d'envoyer et recevoir des signaux de parole, ayant un format analogique, respectivement à destination et en provenance du réseau téléphonique (12).

2. Installation téléphonique (1) selon la revendication 1 caractérisée en ce que les circuits de commutation (17) sont commandables manuellement.

3. Installation téléphonique (1) selon la revendication 1 caractérisée en ce qu'elle comporte en outre des moyens (4, 32) pour recevoir des ordre via le réseau téléphonique (12);
et en ce que les circuits de commutation (17) sont commandables par des moyens (4, 32) pour recevoir des ordre émis par ce serveur (25), ces ordres commandant lesdits circuits de commutation (17) pour connecter le combiné au terminal.

4. Installation (13) de fourniture d'accès à Internet, comportant :
- des circuits (22) de connexion pour la relier d'une part à un réseau téléphonique (12) et d'autre part au réseau Internet (14),
- et des circuits (28, 29) de conversion de signaux de parole ayant un format analogique en des signaux ayant un format numérique acceptable par le réseau Internet ;
**caractérisée** en ce qu'elle comporte des moyens (32) pour envoyer des ordres de commutation à une installation téléphonique (1) comportant un combiné téléphonique analogique (2), un terminal (3) de connexion à Internet, couplé à ce réseau téléphonique (12), et des circuits de commutation (17) pour connecter le combiné au terminal ; ces ordres commandant lesdits circuits de commutation (17) pour connecter le combiné au terminal de connexion à Internet, de façon à permettre à ce combiné d'envoyer et recevoir des signaux de parole, ayant un format analogique, respectivement à destination et en provenance du réseau téléphonique (12).

5. Installation (13) de fourniture d'accès à Internet selon la revendication 4, caractérisée en ce qu'elle comporte en outre des moyens (32) pour envoyer un programme (32) de commutation, à mettre en oeuvre par les moyens (4, 32) pour recevoir des ordre dans le terminal d'une installation téléphonique (1).

6. Installation (13) de fourniture d'accès à Internet selon la revendication 5, caractérisée en ce que le programme de commutation est écrit en langage JAVA.

7. Serveur (25) destiné à être couplé au réseau Internet (14), **caractérisé** en ce qu'il comporte des moyens (32) pour envoyer des ordres de commutation à une installation téléphonique (1) comportant un combiné téléphonique analogique (2), un terminal (3) de connexion à Internet, couplé à un réseau téléphonique (12), et des circuits de commutation (17) pour connecter le combiné au terminal ; ces ordres commandant lesdits circuits de commutation (17) pour connecter le combiné au terminal de connexion à Internet, de façon à permettre à ce combiné d'envoyer et recevoir des signaux de parole, ayant un format analogique, respectivement à destination et en provenance du réseau téléphonique (12).

8. Serveur selon la revendication 7, caractérisée en ce qu'il comporte en outre des moyens pour envoyer un programme (32) de commutation, à mettre en oeuvre dans des moyens (4, 32) pour recevoir des ordre dans le terminal d'une installation téléphonique (1).

9. Serveur selon la revendication 7, caractérisée en ce que le programme de commutation est écrit en langage JAVA.

10. Procédé d'acheminement de communications téléphoniques à partir ou à destination d'une installation téléphonique (1) comportant un combiné téléphonique analogique (2), un terminal (3) de connexion au réseau Internet, couplé à un réseau téléphonique (12), et des circuits de commutation (17) pour connecter le combiné au terminal ; dans lequel on établie d'abord une connexion entre le terminal (3) et le réseau Internet (14) par l'intermédiaire des circuits (13) d'un fournisseur d'accès,
**caractérisé** en ce que, pour mettre en relation ce combiné (2) téléphonique avec les circuits (13) du fournisseur d'accès, on envoie des ordres de commutation depuis un serveur (25) via les circuits (13) d'un fournisseur d'accès au réseau Internet (14), ces ordres commandant les circuits de commutation (17) pour connecter le combiné au terminal de façon à permettre à ce combiné d'envoyer et recevoir des signaux de parole, ayant un format analogique, respectivement à destination et en provenance du réseau téléphonique (12).

11. Procédé selon la revendication 10, caractérisé en ce qu'on émet les ordres de commutation depuis un serveur (25) intégré aux circuits du fournisseur d'accès.

12. Procédé selon la revendication 10, caractérisé en ce qu'on télécharge depuis un site Internet (25), ou depuis les circuits (37) du fournisseur d'accès, un programme (32) de commutation à mettre en oeuvre dans le terminal.
